# EUROPEAN PATENT SPECIFICATION

(11) **EP 0 318 334 B1**
(45) Date of publication and mention of the grant of the patent: **30.11.1994**
(21) Application number: 88311257.5
(22) Date of filing: 28.11.1988
(51) Int. Cl.: H04J 15/00

(54) **Apparatus and method for converting a frequency division multiplex to a time division multiplex**
Vorrichtung und Verfahren zur Umsetzung eines Frequenzvielfachen in ein Zeitvielfaches
Dispositif et procédé pour convertir un signal multiplexé en fréquence en un signal multiplexé temporellement

(30) Priority: 27.11.1987 GB 8727847
(43) Date of publication of application: 31.05.1989
(73) Proprietor: BRITISH TELECOMMUNICATIONS public limited company, London EC1A 7AJ (GB)
(72) Inventor: Smith, David William, Woodbridge Suffolk (GB); Hill, Godfrey Richard, Ipswich Suffolk IP4 2TJ (GB); Lobbett, Roy Andrew, Felixstowe Suffolk IP11 8UJ (GB)
(74) Representative: Roberts, Simon Christopher

(56) References cited:
- EP-A- 0 009 534
- EP-A- 0 033 237
- EP-A- 0 193 190
- GB-A- 1 297 922
- ELECTRONIC LETTERS, vol. 22, no. 12, 5th June 1986, pages 675-677, Hitchin, GB; N. SHIBATA et al.: " Crosstalk due to three-wave mixing process in a coherent single-mode transmission line"

## Description

The invention relates to apparatus and methods for converting a frequency division multiplex (fdm) signal into a time division multiplex (tdm) signal. It finds particular but not exclusive application in a communication system comprising a primary station and a plurality of secondary stations, each of the stations having signal transmitting means and signal receiving means, a first communication link extending from the primary station to signal splitting means for supplying signals from the primary station to each of the secondary stations, and a second communication link extending from signal combining means, which receives signals from each of the secondary stations, to the primary station.

Such communication systems find application in a variety of fields including local telephone networks and the like. One method of operating such a communication system is to distribute signals from the primary station (or exchange) as a multiplex, for example a common time division multiplex signal, to all the secondary stations. Each station then selects the time slots appropriate to it. Although this is relatively straightforward, difficulties arise if the secondary stations are to transmit information back to the primary station by this method. In this case, the signals transmitted from the secondary stations must be accurately timed to avoid signal "collisions" in the common path back to the primary station. The timing will depend principally on the path length and, in the case of optical communication systems using optical fibres, this path length can vary slightly with temperature effects. Thus a ranging system must be built into each terminal.

These difficulties can be obviated by combining the return signals from the secondary stations into a frequency division multiplex signal instead of attempting to combine these signals into a time division multiplex signal. This avoids the problems of timing due to variations in temperature and the like.

Typically, the signals transmitted between the stations will comprise optical signals and in this case the stations may be coupled by optical waveguides such as optical fibres. However other media, including air, could define the communication links. Furthermore, the signals could comprise electrical or radio frequency signals.

In some cases, separate paths may be provided between the primary station and the secondary stations to carry signals in respective directions. Conveniently, however, a common transmission path is used, for example a common optical waveguide in the case of optical signals. In the latter case the signal combining and splitting means are provided by a common element. In the case of a common transmission path, the signals could be transmitted with the same or different wavelengths in the opposite directions.

The primary station receiving means may include a splitting means to split the incoming frequency division multiplex signal into a plurality of subsidiary signals, one for each secondary station, and a plurality of demodulating circuits for receiving respective ones of the subsidiary signals and for regenerating the information associated with the signal from the corresponding secondary station. However, this arrangement needs separate demodulating circuits for each channel or secondary station.

British Patent Specification No. 1297922 discloses amplitude modulating an optical carrier signal by several radio frequency sub-carriers each modulated with lower frequency information bearing signals. At a receiving terminal the incoming optical signal is divided amonst n optical fibres each leading to its own respective receiver comprising a combined mixer and demodulator, a local oscillator, and an intermediate frequency (IF) amplifier. The outputs of all the channels, i.e. the IF amplifiers, are fed to a baseband detector for recovery of the information bearing signals.

It is an object of the present invention to overcome the need for such separate demodulating circuits or separate receivers.

Accordingly there is provided apparatus including a plurality of channels, each channel having a known common data rate, for converting a frequency division multiplex signal into a time division multiplex signal comprising a reference frequency signal generator for repeatedly generating a series of reference frequency signals in steps at a repetition rate synchronised to said known common data rate of the frequency division multiplex signal, the number of reference frequency signals being equal to the number of carrier signals in the frequency division multiplex signal; mixing means for mixing the frequency division multiplex signal and the reference frequency signals to generate intermediate frequency signals, the combination of respective pairs of carrier signals and reference frequency signals generating respective intermediate frequency signals at a common frequency; a bandpass filter for passing only the intermediate frequency signals at said common frequency from the output of the mixing means, the filter output thus constituting a time division multiplex signal in the form of a repeating corresponding series of respective intermediate frequency signals; and demodulating means responsive to the output from the bandpass filter for producing from the respective intermediate frequency signals corresponding channel data signals.

Typically, the reference frequency signal generator will comprise a voltage controlled oscillator. The series of reference frequency signals may be generated in steps such that the repetition rate of the full staircase of reference frequency signals is preferably substantially twice the data rate. Other repetition rates are also possible.

The generation of the intermediate frequency signals at a common frequency may be carried out in the electrical domain or in the optical domain, for example using a coherent optical heterodyne detection scheme in which the local optical oscillator is stepped through a staircase of optical reference frequency signals to be mixed with a received optical fdm signal.

According to a second aspect of the invention there is provided a method of converting a frequency division multiplex signal including a plurality of channels, each channel having a known common data rate, into a time division multiplex signal, comprising repeatedly generating a series of reference frequency signals in steps at a repetition rate synchronised to said known common data rate, the number of reference frequency signals being equal to the number of carrier signals in the frequency division multiplex signal; mixing the frequency division multiplex signal and the reference frequency signals to generate respective intermediate frequency signals at a common frequency and demodulating the intermediate frequency signals at the common frequency to product corresponding channel data signals, which thus constitute a time division multiplex signal.

According to a further aspect of the invention there is provided a communications system comprising a primary station; and a plurality of secondary stations, each of the stations having signal transmitting means and signal receiving means, a first communication link extending from the primary station to signal splitting means for supplying signals from the primary station to each of the secondary stations, and a second communication link extending from signal combining means, which receives signals from each of the secondary stations, to the primary station wherein the signal transmitting means of the primary station and the signal receiving means of the secondary stations are adapted to transmit and receive respectively multiplex signals, the signal transmitting means of the secondary stations are adapted to transmit signals at respective carrier frequencies, the signal combining means combining these signals into a common frequency division multiplex signal and the receiving means of the primary station is adapted to receive the common frequency division multiplex signal, the primary station including apparatus for converting the common frequency division multiplex signal into a time division multiplex according to the first aspect of the invention.

Examples of such an apparatus, method and communication systems in accordance with the present invention will now be described with reference to the accompanying drawings, in which:-
Figure 1 is a schematic block diagram of one example of a communication system;
Figure 2 is a block diagram of a fdm to tdm converter according to the present invention; and
Figure 3 is a schematic block diagram of an optical domain fdm to tdm converter according to the present invention.

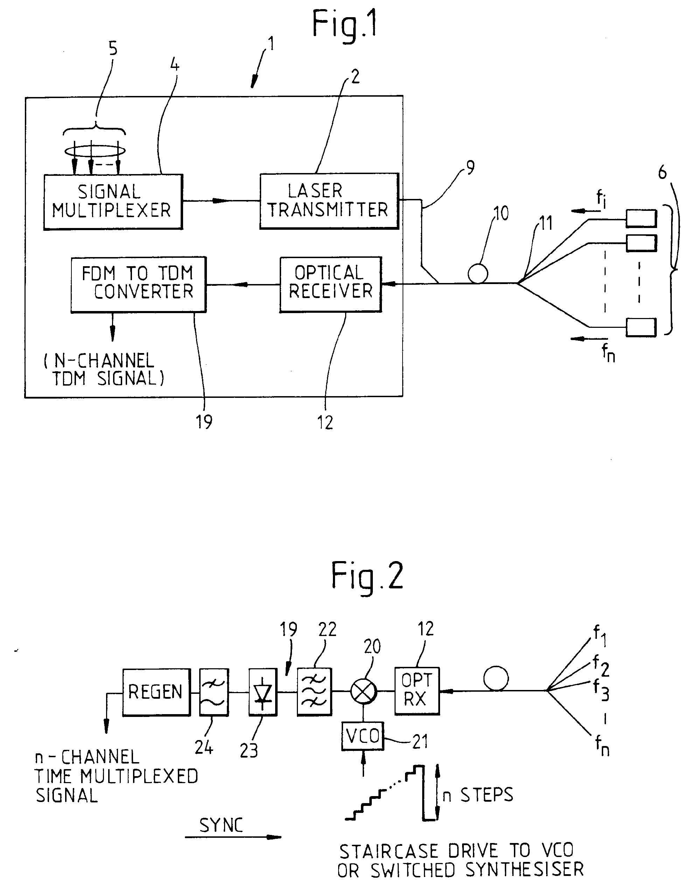

The communication system which is shown schematically in Figure 1 comprises a primary station or exchange 1 having an optical transmitter 2 and a receiver 12. The transmitter 2 is connected to an electrical signal multiplexer 4 which receives data signals on a plurality of channels 5, these signals being destined for respective ones of n terminals or secondary stations 6. The data signals received by the signal multiplexer 4 are multiplexed onto a common electrical signal in a time division manner and the time division multiplex signal is fed to an optical transmitter 2. The transmitter 2 is modulated in accordance with the incoming electrical signal to generate a time division multiplex optical signal which is fed along an optical fibre 9 to an optical fibre 10. The optical fibre 10 extends to an optical splitter 11 which splits the incoming signal into a number of subsidiary signals, one for each secondary station 6. Each station 6 includes conventional demultiplexing circuitry to enable it to read the correct data contained within the time slots associated with that station.

When a secondary station 6 wishes to transmit information back to the exchange 1, it generates an optical carrier signal with a frequency (fᵢ) unique to that station which is modulated with the data. The modulated signal is fed along the same optical fibre as the incoming signal to the optical splitter 11 which acts as a combiner to combine the signals from the stations 6 to form a frequency division multiplex signal which is fed back along the optical fibre 10 to an optical receiver 12 in the exchange 1. The receiver 12 converts the incoming optical signal into an electrical signal which is then fed to a fdm to tdm converter 19 according to the present invention which will be now be described with reference to Figure 2.

Figure 2 illustrates the fdm to tdm convertor 19 of a receiver shown in Figure 1. The frequency division multiplex signal is received by the receiver 12, and fed to a mixer circuit 20. The other input of the mixer circuit 20 is connected to a voltage controlled oscillator 21 which is driven in a staircase manner, as shown in the drawing, so as to supply a series of different frequencies at stepped intervals to the mixer circuit 20.

In practice, the transmitting circuit 2, 4 of the primary station will respond to a clock signal generated within the primary station. To assist in demodulating the time division multiplex signal, this clock signal will be transmitted also to each of the secondary stations 6. Furthermore, the secondary stations 6 will use the same clock signal when modulating their respective carrier signals to generate return signals and this enables the VCO 21 to be synchronised to the incoming signal.

The time period of each step in the staircase of the reference frequency signals may be selected as shown in Figure 2 selected so that the sweep frequency (i.e. repetition rate) of the full staircase of signals is twice or a higher integral of the data rate of the incoming signal and this defines the time period of each time division of the resultant time division multiplex signal. It may be necessary to adjust the phase of the individual return channels at the secondary stations 6.

The reference frequency signals generated by the VCO 21 are chosen such that the result of mixing each of these signals with a respective one only of the incoming carrier signals f₁-fₙ is a respective signal at a common intermediate frequency. The mixing of each reference frequency signal with the other carrier signals of the incoming signal will result in respective signals at intermediate frequencies different from the common intermediate frequency.

A bandpass filter 22 is positioned downstream of the mixer 20 to eliminate all signals but that at the common intermediate frequency which is then fed to a demodulator 23 whose output is fed to a lowpass filter 24. The output from the lowpass filter 24 is an n-channel time division multiplex signal which can then be analysed in a conventional manner.

The primary station 1 may alternatively transmit frequency multiplexed signals to the secondary stations 6, the stations 6 being provided with appropriate demultiplexers to enable them to select the signal at the appropriate frequency associated with the station.

It will be appreciated that apparatus for converting a fdm signal to a tdm signal according to the present invention can be employed with communications systems other than in the exemplary system shown in Figure 1.

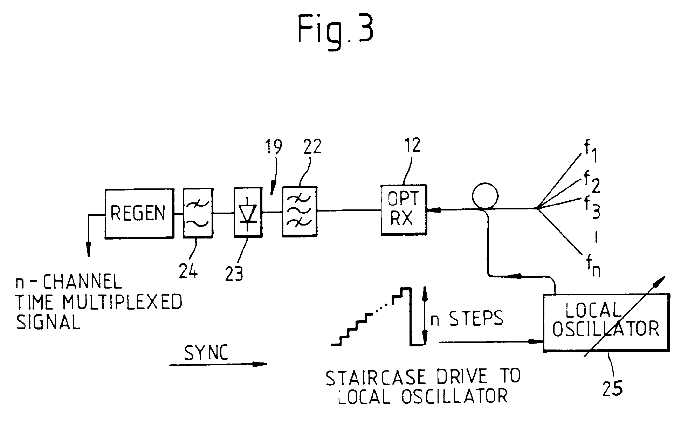

The present invention is also applicable to fdm to tdm signal conversion in the optical domain, for example in an optical heterodyne coherent receiver, in which case the mixer comprises an optical detector which mixes a number of optical reference frequency signals from a variable local oscillator 25, a laser for example, with the received optical fdm signal from the secondary stations 6 - as shown in Figure 3.

## Claims

1. Apparatus including a plurality of channels, each channel having a known common data rate, for converting a frequency division multiplex signal into a time division multiplex signal comprising a reference frequency signal generator (21; 25) for repeatedly generating a series of reference frequency signals in steps at a repetition rate synchronised to said known common data rate of the frequency division multiplex signal, the number of reference frequency signals being equal to the number of carrier signals in the frequency division multiplex signal; mixing means (20; 12) for mixing the frequency division multiplex signal and the reference frequency signals to generate intermediate frequency signals, the combination of respective pairs of carrier signals and reference frequency signals generating respective intermediate frequency signals at a common frequency; a bandpass filter (22) for passing only the intermediate frequency signals at said common frequency from the output of the mixing means, the filter output thus constituting a time division multiplex signal in the form of a repeating corresponding series of respective intermediate frequency signals; and demodulating means (23) responsive to the output from the bandpass filter for producing from the respective intermediate frequency signals corresponding channel data signals.

2. Apparatus according to claim 1, wherein the repetition rate of the series of reference frequency signals generated by the reference frequency signal generator (21; 25) is substantially twice the data rate of the incoming frequency division multiplex signal.

3. Apparatus according to either claim 1 or claim 2, in which the reference frequency signal generator (25) generates optical reference frequency signals.

4. Apparatus system according to either claim 1 or claim 2, wherein the reference frequency signal generator (21) comprises a voltage controlled oscillator.

5. A method of converting a frequency division multiplex signal including a plurality of channels, each channel having a known common data rate, into a time division multiplex signal, comprising repeatedly generating a series of reference frequency signals in steps at a repetition rate synchronised to said known common data, the number of reference frequency signals being equal to the number of carrier signals in the frequency division multiplex signal; mixing the frequency division multiplex signal and the reference frequency signals to generate intermediate frequency signals, the combination of respective pairs of carrier signals and reference frequency signals generating respective intermediate frequency signals at a common frequency; and demodulating the intermediate frequency signals at the common frequency to produce corresponding channel data signals, which thus constitute a time division multiplex signal.

6. A method according to claim 5, wherein the repetition rate of the series of reference frequency signals is substantially twice the data rate.

7. A method according to either claim 5 or claim 6, in which the reference frequency signal generator generates optical reference frequency signals and the mixing takes place in the optical domain.

8. A communication system comprising a primary station (1); and a plurality of secondary stations (6), each of the stations having signal transmitting means (2) and signal receiving means (12, not shown), a first communication link (9, 10) extending from the primary station to signal splitting means (11) for supplying signals from the primary station (1) to each of the secondary stations (6), and a second communication link (10) extending from signal combining means (11), which receives signals from each of the secondary stations, to the primary station (6) wherein the signal transmitting means (2) of the primary station (1) and the signal receiving means (not shown) of the secondary stations (6) are adapted to transmit and receive respectively multiplex signals, the signal transmitting means of the secondary stations (6) are adapted to transmit signals at respective carrier frequencies, the signal combining means (11) combining these signals into a common frequency division multiplex signal and the receiving means (12) of the primary station (1) is adapted to receive the common frequency division multiplex signal, the primary station including apparatus (19) for converting the common frequency division multiplex signal into a time division multiplex signal as claimed in any one of claims 1 to 4.

9. A system according to claim 8, in which the communication links (9, 10) comprise optical waveguides.

10. A system according to either claim 8 or claim 9, wherein the signal splitting means and the signal combining means are provided by a common element (11), a common communication link (10) being provided between the common element and the primary station (1).

## Patentansprüche

1. Vorrichtung mit einer Mehrzahl von Kanälen, die jeweils eine bekannte gemeinsame Übertragungsrate haben, zum Umwandeln eines Frequenzmultiplexsignals in ein Zeitmultiplexsignal, mit einem Bezugsfrequenzsignalgenerator (21; 25) zum wiederholten Erzeugen einer Reihe von Bezugsfrequenzsignalen in Schritten mit einer auf die bekannte gemeinsame Übertragungsrate des Frequenzmultiplexsignals synchronisierten Wiederholrate, wobei die Anzahl der Bezugsfrequenzsignale gleich der Anzahl der Trägersignale im Frequenzmultiplexsignal ist; Mischmitteln (20; 12) zum Mischen des Frequenzmultiplexsignals und der Bezugsfrequenzsignale, um Zwischenfrequenzsignale zu erzeugen, wobei die paarweise Kombination von Trägersignalen und Bezugsfrequenzsignalen jeweils Zwischenfrequenzsignale mit einer gemeinsamen Frequenz erzeugt; einem Bandfilter (22) zum Durchlassen nur der Zwischenfrequenzsignale mit der gemeinsamen Frequenz vom Ausgang des Mischmittels, wodurch der Filterausgang ein Zeitmultiplexsignal in Form einer wiederholten Folge der jeweiligen Zwischenfrequenzsignale bildet; und mit einem Demoduliermittel (23), das auf den Ausgang des Bandfilters reagiert, um aus den jeweiligen Zwischenfrequenzsignalen entsprechende Kanaldatensignale zu erzeugen.

2. Vorrichtung nach Anspruch 1, bei dem die Wiederholrate der vom Bezugsfrequenzsignalgenerator (21; 25) erzeugten Folge von Bezugsfrequenzsignalen im wesentlichen das Doppelte der Übertragungsrate des einlaufenden Frequenzmultiplexsignals ist.

3. Vorrichtung nach Anspruch 1 oder Anspruch 2, bei dem der Bezugsfrequenzsignalgenerator (25) optische Bezugsfrequenzsignale erzeugt.

4. Vorrichtung nach Anspruch 1 oder Anspruch 2, bei dem der Bezugsfrequenzsignalgenerator (21) einen spannungsgesteuerten Oszillator umfaßt.

5. Verfahren zum Umwandeln eines Frequenzmultiplexsignals mit einer Mehrzahl von Kanälen, von denen jeder eine bekannte gemeinsame Übertragungsrate hat, in ein Zeitmultiplexsignal, mit den Schritten: wiederholtes Erzeugen einer Reihe von Bezugsfrequenzsignalen in Schritten mit einer auf die bekannte Übertragungsrate synchronisierten Wiederholrate, wobei die Anzahl der Bezugsfrequenzsignale gleich der Anzahl der Trägersignale im Frequenzmultiplexsignal ist; Mischen des Frequenzmultiplexsignals und der Bezugsfrequenzsignale, um Zwischenfrequenzsignale zu erzeugen, wobei die paarweise Kombination von Trägersignalen und Bezugsfrequenzsignalen jeweils Zwischenfrequenzsignale mit einer gemeinsamen Frequenz liefert; und Demodulieren der Zwischenfrequenzsignale bei der gemeinsamen Frequenz, um entsprechende Kanaldatensignale zu erzeugen, die dadurch ein Zeitmultiplexsignal bilden.

6. Verfahren nach Anspruch 5, bei dem die Wiederholrate der Folge von Bezugsfrequenzsignalen im wesentlichen das Doppelte der Übertragungsrate ist.

7. Verfahren nach Anspruch 5 oder Anspruch 6, bei dem der Bezugsfrequenzsignalgenerator optische Bezugsfrequenzsignale erzeugt und die Mischung auf optischem Wege stattfindet.

8. Kommunikationssystem mit einer Primärstation (1) und einer Mehrzahl von Sekundärstationen (6), wobei jede der Stationen Signalsendemittel (2) und Signalempfangsmittel (12, nicht gezeigt), eine erste Kommunikationsverbindung (9, 10), die von der Primärstation zu einem Signalverteilermittel (11) zum Zuführen von Signalen von der Primärstation (1) zu jeder Sekundärstation (6) verläuft, und einer zweiten Kommunikationsverbindung (10), die von einem Signalsammlermittel (11), das Signale von jeder der Sekundärstationen empfängt, zur Primärstation (6) verläuft, wobei das Signalsendemittel (2) der Primärstation (1) und die Signalempfangsmittel (nicht gezeigt) der Sekundärstationen (6) eingerichtet sind, Multiplexsignale zu senden bzw. zu empfangen, die Signalsendemittel der Sekundärstationen (6) eingerichtet sind, Signale mit jeweiligen Trägerfrequenzen zu senden, wobei das Signalkombinationsmittel (11), das diese Signale zu einem gemeinsamen Frequenzmultiplexsignal kombiniert, und das Empfangsmittel (12) der Primärstation (1) eingerichtet sind, das gemeinsame Frequenzmultiplexsignal zu empfangen, und die Primärstation eine Vorrichtung (19) zum Umwandeln des gemeinsamen Frequenzmultiplexsignals in ein Zeitmultiplexsignal nach einem der Ansprüche 1 bis 4 enthält.

9. System nach Anspruch 8, bei dem die Kommunikationsverbindungen (9, 10) optische Wellenleiter umfassen.

10. System nach Anspruch 8 oder Anspruch 9, bei dem das Signalverteilermittel und das Signalkombinationsmittel als gemeinsames Element (11) vorgesehen sind und eine gemeinsame Kommunikationsverbindung (10) zwischen dem gemeinsamen Element und der Primärstation (1) vorgesehen ist.

## Revendications

1. Appareil incluant une série de canaux, chaque canal présentant une fréquence commune connue de données, pour convertir un signal multiplex à division de fréquences en un signal multiplex à division de temps, comprenant un générateur (21; 25) de signaux à fréquence de référence pour engendrer de façon répétée par gradins une série de signaux de fréquence de reférence à une fréquence de répétition synchronisée avec une fréquence commune connue de données du signal multiplex à division de fréquences, le nombre des signaux de fréquence de référence étant égal au nombre de signaux porteurs dans le signal multiplex à division de fréquences; un moyen mélangeur (20; 12) pour mélanger le signal multiplex à division de fréquences et les signaux de fréquence de référence afin d'engendrer des signaux intermédiaires de référence, la combinaison de paires respectives de signaux porteurs et de signaux de fréquence de référence engendrant des signaux respectifs de fréquence intermédiaire à une fréquence commune; un filtre passe-bande (22) pour ne laisser passer de la sortie du moyen mélangeur que les signaux de fréquence intermédiaires à ladite fréquence commune, la sortie du filtre constituant ainsi un signal dudit multiplex à division de temps sous forme d'une série correspondante qui se répète de signaux respectifs à fréquence intermédiaire; et un moyen démodulateur (23) sensible à la sortie du filtre passe-bande pour produire, à partir des signaux respectifs de fréquence intermédiaire, des signaux correspondant de données de canaux.

2. Appareil selon la revendication 1 dans lequel la fréquence de répétition de la série de signaux de fréquence de référence engendrée par le générateur (21; 25) de signaux de fréquence de référence est sensiblement double de la fréquence de données du signal entrant de multiplex à division de fréquences.

3. Appareil selon la revendication 1 ou la revendication 2, dans lequel le générateur (25) de signaux de fréquence de référence engendre des signaux optiques de fréquence de référence.

4. Appareil selon la revendication 1 ou la revendication 2, dans lequel le générateur (21) de signaux de fréquence de référence comprend un oscillateur commandé par tension.

5. Procédé de conversion d'un signal multiplex à division de fréquences incluant une série de canaux, chaque canal présentant une fréquence commune connue de données, en un signal multiplex à division de temps, comprenant les étapes consistant à engendrer de façon répétée par gradins une série de signaux de fréquence de référence à une fréquence de répétition synchronisée avec ladite fréquence commune connue de données, le nombre des signaux de fréquence de référence étant égal au nombre de signaux porteurs dans le signal multiplex à division de fréquences; mélanger le signal multiplex à division de fréquences et les signaux de fréquence de référence afin d'engendrer des signaux intermédiaires de référence, la combinaison de paires respectives de signaux porteurs et de signaux de fréquence de référence engendrant des signaux respectifs de fréquence intermédiaire à une fréquence commune; et démoduler les signaux de fréquence intermédiaire à la fréquence commune afin de produire des signaux correspondants de données de canaux, qui constituent donc un signal à multiplex à division de temps.

6. Un procédé selon la revendication 5, dans lequel la fréquence de répétition de la série des signaux de fréquence de référence est sensiblement double de la fréquence de données.

7. Un procédé selon la revendication 5 ou la revendication 6 dans lequel le générateur de signaux de fréquence de référence engendre des signaux optiques de fréquence de référence et le mélange s'effectue dans le domaine optique.

8. Un système de communications comprenant une station principale (1); et une série de stations secondaires (6), chacune des stations incluant un moyen émetteur (2) de signaux et un moyen récepteur (12, non représenté) de signaux, une première liaison de communications (9, 10) s'étendant depuis la station principale vers un moyen de division (11) de signaux pour envoyer des signaux depuis la station principale (1) vers chacune des stations secondaires (6), et une deuxième liaison de communications (10) s'étendant depuis un moyen de combinaison (11) de signaux, qui reçoit des signaux venant de chacune des stations secondaires, vers la station principale (6), dans lequel le moyen émetteur (2) de signaux de la station principale (1) et le moyen récepteur (non représenté) de signaux des stations secondaires (6) sont aptes à émettre et à recevoir respectivement des signaux en multiplex, les signaux émetteurs des stations secondaires (6) sont aptes à émettre des signaux à des fréquences de porteuses respectives, le moyen de combinaison (11) de signaux combinant ces signaux en un signal multiplex commun à division de fréquences, et le moyen récepteur (12) de la station principale (1) est adapté à recevoir le signal commun de multiplex à division de fréquences, la station principale incluant un appareil (19) de conversion du signal commun de multiplex à division de fréquences en un signal multiplex à division de temps selon une quelconque des revendication 1 à 4.

9. Un système selon la revendication 8, dans lequel les liaisons de communications (9, 10) comprennent des guides d'ondes optiques.

10. Un système selon la revendication 8 ou la revendication 9, dans lequel le moyen de division de signaux et le moyen de combinaison de signaux sont constitués par un élément commun (11), une liaison de communications (10) étant disposée entre l'élément commun et la station principale (1).
